# EUROPEAN PATENT APPLICATION

(11) **EP 0 802 683 A2**
(43) Date of publication of application: **22.10.1997**
(21) Application number: 97302517.4
(22) Date of filing: 14.04.1997
(51) Int. Cl.: H04N 7/50

(54) **Data priority processing for MPEG system**

(30) Priority: 19.04.1996 KR 9611950
(71) Applicant: Samsung Electronics Co., Ltd., Suwon City, Kyungki-do (KR)
(72) Inventor: Kim, Eui-Gyu, Dongahn-gu, Ahnyang-city, Kyungki-do (KR)
(74) Representative: Chugg, David John

(57) **Abstract**

A priority order processing circuit for an MPEG system adapted to determine the priority order of events generated from a multiprocessor of a decoding system utilizing MPEG1 and MPEG2 schemes while controlling operations of the system. The priority order processing circuit includes a video buffer verifier writing controller (30) for generating a writing request signal when a situation exists for storing data in an external memory, a video buffer verifier reading controller (32) for generating a reading request signal when a situation exists for reading the stored data, a display controller (34) for generating a display request signal in response to recovered data received therein, a motion compensation reading controller (36) for generating a motion compensation reading request signal when a motion compensation for the stored data is requested, a motion compensation writing controller (38) for generating a motion compensation writing request signal when the motion compensation is requested, and a priority order controller (40) for determining a priority order for various request signals respectively generated from the video buffer verifier writing controller (30), video buffer verifier reading controller (32), display controller (34), motion compensation reading controller (36) and motion compensation writing controller (38) while generating a service code for executing a data processing service.

## Description

The present invention relates to a control circuit for an MPEG (Moving Picture Experts Group) system, and more particularly to a priority order processing circuit for an MPEG system adapted to determine the priority order of events generated from a multiprocessor of a decoding system utilizing MPEG1 and MPEG2 schemes while controlling operations of the system.

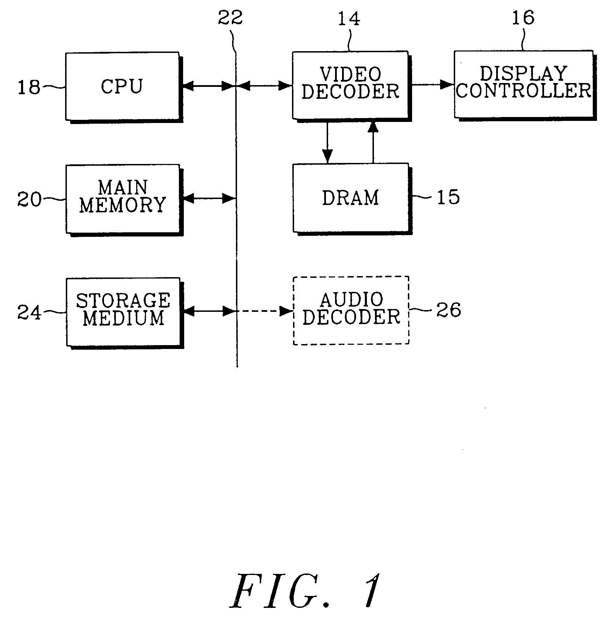

Generally, an MPEG system is a system for digitally converting audio or video information so that the information can be stored or transferred for the use or re-use thereof. In other words, such an MPEG system is adapted to provide an easy handling of audio or video information. To this end, the MPEG system essentially includes a coder/decoder for encoding audio or video information and decoding coded information. An example of an MPEG system is illustrated in Figure 1.

Figure 1 is a block diagram illustrating the configuration of a conventional MPEG system. As shown in Figure 1, the MPEG system includes a video decoder 14 for decoding a stream of coded video data, thereby outputting recovered video data, and a dynamic random access memory (hereinafter, simply referred to as "memory") for storing the recovered video data output from the video decoder 14. A display controller 16 is also provided which serves to display the video data recovered by the video decoder 14 on a display unit (not shown). The MPEG system further includes a central processing unit (hereinafter, referred to as "CPU") 18 for controlling the entire operation of the MPEG system, and a main memory 20 for storing system information and accessing to the stored information under the control of the CPU 18.

In Figure 1, the reference numeral 24 denotes a storage medium, in particular, a large-capacity storage medium such as a hard disk. Coded video or audio data streams are stored in the storage medium 24. The reference numeral 26 denotes an audio decoder which serves to decode coded audio data, thereby outputting recovered audio data. All the elements mentioned above are controlled by the CPU 18 to which those elements are coupled via a system bus 22.

The MPEG system having the configuration of Figure 1 performs the following data processing under the control of the CPU 18.

When the video decoder 14 operates under the control of the CPU 18, it accesses coded bit stream data stored in the storage medium 24 and recovers video data from the accessed data. The video decoder 14 then controls the memory 15 to store the recovered video data. The recovered video data stored in the memory 15 may be subsequently read for a motion compensation or a display on a screen. For example, where a motion compensation is necessary, the recovered video data stored in the memory 15 is read in accordance with a desired operation of the video decoder 14. For a display on the screen, the video data, which has been recovered and compensated for motion, is transferred to the display controller 16. The display controller 16 sends the recovered video data received from the video decoder 14 to a display unit (not shown) under the control of the CPU 18 to display the recovered video. The audio decoder 26 also operates in a similar manner to the video decoder 14.

During the above-mentioned operation, the CPU 18 performs instructions for various jobs required for the recovery of the video data. When the CPU 18 receives requests for jobs from data processors such as the display controller 16 and audio decoder 26, it determines a priority order for processes respectively associated with the requests for jobs. In accordance with the determined priority order, the CPU 18 performs an allocation of authorities for jobs to execute a desired data processing. The CPU 18 also executes an operation for transferring system information, which is extracted from input data and stored in the main memory 20, at the request of the video decoder 12.

In the conventional MPEG system having the configuration of Figure 1, however, the priority order for job requesting signals generated from various data processors is processed by an additional processor, namely, the CPU. As a result, it is necessary to execute a procedure which should use additional programming. In this case, there is an increase in costs because of the use of the CPU which is expensive. This conventional MPEG system also has a problem in that the processing speed is low. This is because the priority order for job request signals generated from data processors is determined by the CPU which operates in accordance with a program.

It is an aim of embodiments of the invention to provide an MPEG system including a priority order processing circuit capable of rapidly determining the priority order for job request signals respectively generated from a plurality of data processors.

Another aim of embodiments of the invention is to provide a circuit for determining the priority order for job request signals respectively generated from a plurality of data processors without using any central processing unit.

Another aim is to provide an apparatus for determining the priority order for a multiple decoding process associated with a decoder in an MPEG system and rapidly processing the decoding process in accordance with the determined priority order.

According to an aspect of the invention, there is provided a priority order processing circuit for an MPEG system, comprising:
a plurality of controllers generating a plurality of request signals; and
a priority order controller for determining a priority order amongst the various request signals received from said controllers and generating a service code for executing a data processing service.

The priority order control means preferably comprises a latch circuit for latching request signals generated from a plurality of controllers, a priority order decoder coupled to output terminals of the latch circuit, at which the latched request signals are output, respectively, in such a manner that it receives the latched request signals in accordance with a given priority order, the priority order decoder serving to generate a motion compensation holding signal in response to an activation of at least one of the latched request signals while decoding activated states of the request signals, thereby outputting one of the request signals which has a higher priority than the remaining request signals, a multiplexor unit for outputting the output from the priority order decoder as a service code in response to the motion compensation holding signal, and a service completion control signal generating circuit for initializing the outputs from the latch circuit in response to an activation of service completion signals from a plurality of associated controllers, respectively.

Preferably, said plurality of controllers comprise:
a video buffer verifier writing controller for generating a writing request signal when a situation exists for storing data in an external memory;
a video buffer verifier reading controller for generating a reading request signal when a situation exists for reading data stored in said external memory;
a display controller for generating a display request signal in response to recovered data received therein;
a motion compensation reading controller for generating a motion compensation reading request signal when a motion compensation for the data stored in said external memory is requested; and
a motion compensation writing controller for generating a motion compensation writing request signal when said motion compensation for the data stored in said external memory is requested.

According to another aspect of the present invention, there is provided a priority order processing circuit for an MPEG system comprising: a video buffer verifier writing controller for generating a writing request signal when a situation exists for storing data in an external memory; a video buffer verifier reading controller for generating a reading request signal when a situation exists for reading data stored in the external memory; a display controller for generating a display request signal in response to recovered data received therein; a motion compensation reading controller for generating a motion compensation reading request signal when a motion compensation for the data stored in the external memory is requested; a motion compensation writing controller for generating a motion compensation writing request signal when the motion compensation for the data stored in the external memory is requested; and priority order control means for determining a priority order for various request signals respectively generated from the video buffer verifier writing controller, the video buffer verifier reading controller, the display controller, the motion compensation reading controller and the motion compensation writing controller while generating a service code for executing a data processing service.

For a better understanding of the invention, and to show how embodiments of the same may be carried into effect, reference will now be made, by way of example, to the accompanying diagrammatic drawings, in which:
Figure 1 is a block diagram illustrating the configuration of a conventional MPEG system;
Figure 2 is a block diagram illustrating a priority order processing circuit for an MPEG system in accordance with an embodiment of the present invention;
Figure 3 is a circuit diagram illustrating a concrete configuration of the priority order controller shown in Figure 2; and
Figure 4 is a schematic view illustrating a priority order transition.

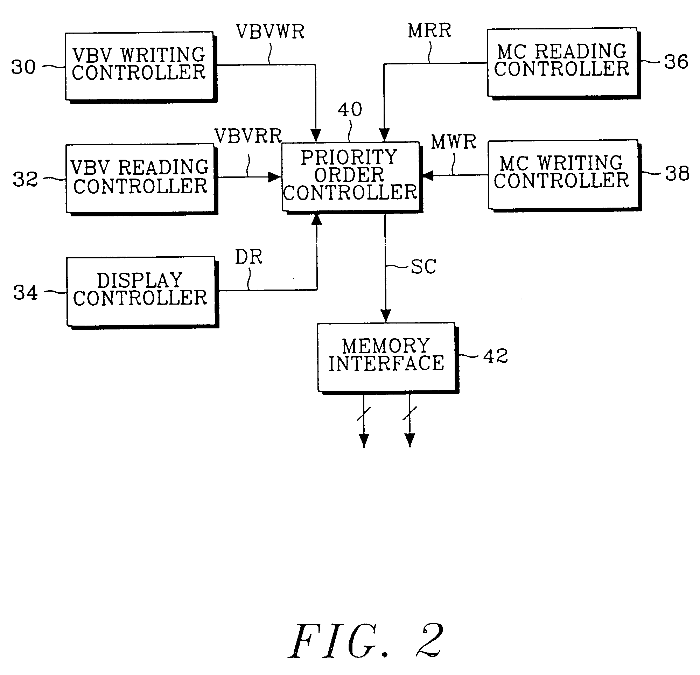

Figure 2 is a block diagram illustrating an embodiment of a priority order processing circuit for an MPEG system in accordance with the present invention. As shown in Figure 2, the priority order processing circuit includes a video buffer verifier (VBV) writing controller 30 for generating a writing request signal VBVWR when a situation exists for storing data in an external memory (not shown) and a VBV reading controller 32 for generating a reading request signal VBVRR when a situation exists for reading data stored in the external memory. A display controller 34 is also provided which generates a display request signal DR in response to recovered data received therein. The priority order processing circuit further includes a motion compensation (MC) reading controller 36 for generating an MC reading request signal MRR when a motion compensation for the data stored in the external memory is requested, an MC writing controller 38 for generating an MC writing request signal MWR when a motion compensation for the data stored in the external memory is requested, a priority order controller 40 for determining the priority order for various request signals respectively generated from the VBV writing controller 30, VBV reading controller 32, display controller 34, MC reading controller 36 and MC writing controller 38 while generating a service code SC for executing a data processing service and generating a service-done signal S-done in response to a service completion signal received therein, and a memory interface 42 for externally interfacing the service code SC and service-done signal S-done output from the priority order controller 40.

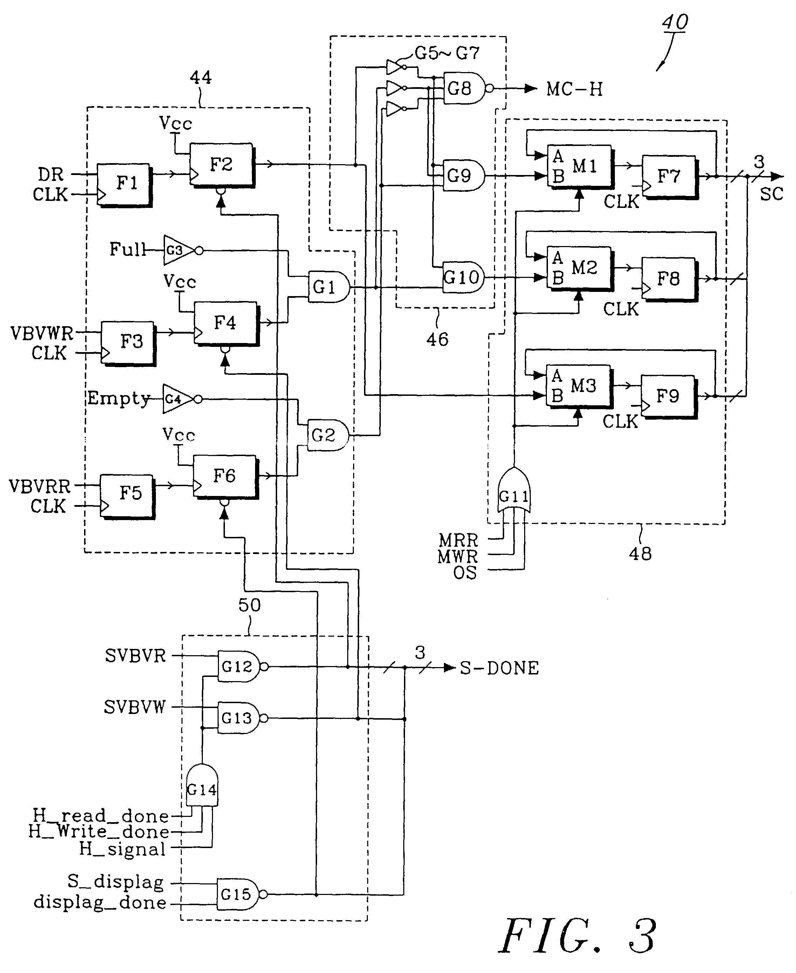

Figure 3 is a circuit diagram illustrating a concrete configuration of the priority order controller shown in Figure 2. As shown in Figure 3, the priority order controller includes a latch circuit 44 for latching inputs, namely, request signals generated from a plurality of controllers, for example, a VBV writing request signal VBVWR, a VBV reading request signal VBVRR and a display request signal DR. The latch circuit 44 also serves to reset the latched request signals in response to service completion signals respectively associated with the latched request signals and received therein. The latch circuit 44 includes a plurality of flip-flops F1 to F6. A priority order decoder 46 is coupled to output terminals of the latch circuit 44 at which the latched request signals are output, respectively, in such a manner that it receives the latched request signals in accordance with a given priority order. The priority order decoder 46 generates a motion compensation (MC) holding signal MC-H in response to an activation of at least one of the latched request signals and decodes activated states of the request signals, thereby outputting one of the request signals which has a higher priority than the- remaining request signals. The priority order controller further includes a multiplexor unit 48 for outputting the output from the priority order decoder 46 as a service code SC in response to the MC holding signal MC-H, and a service completion control signal generating circuit 50 for initializing the outputs from the latch circuit 44 in response to an activation of service completion signals from a plurality of associated controllers, respectively.

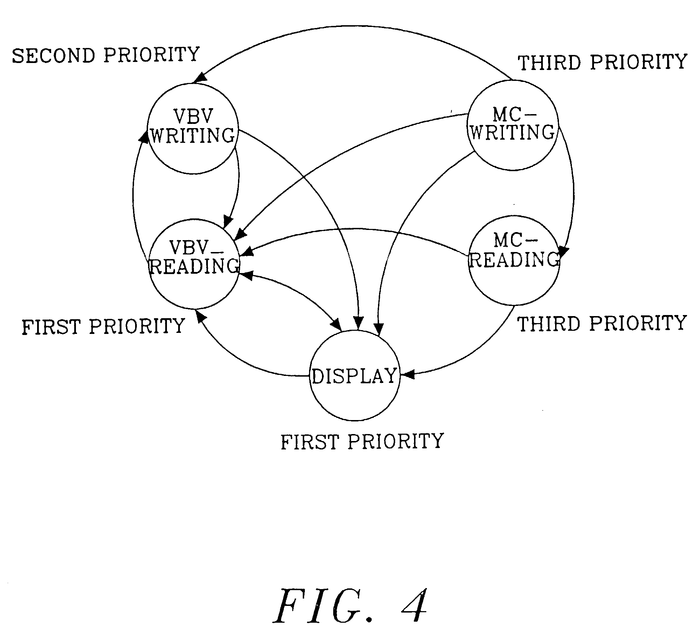

Figure 4 is a schematic view illustrating a priority order transition in accordance with the present invention. As shown in Figure 4, request signals simultaneously generated from a plurality of controllers, for example, the VBV writing controller 30, VBV reading controller 32, display controller 34, MC reading controller 36 and MC writing controller 38, are processed in the order shown in Figure 4. For example, when a request signal having a lower priority than request signals already generated is generated from an optional controller, a service associated with the request signal is executed after the completion of services associated with the request signals having a higher priority than the request signal.

Now, a priority order processing procedure executed in the MPEG system of Figure 2 according to the present invention will be described in detail in conjunction with Figure 3.

First, it is assumed that a plurality of request signals respectively generated from a plurality of controllers shown in Figure 2, namely, the VBV writing controller 30, VBV reading controller 32, display controller 34, MC reading controller 36 and MC writing controller 38, are simultaneously input at the priority order controller 40. The request signals include a VBV writing request signal VBVWR, a VBV reading request signal VBVRR, a display request signal DR, an MC reading request signal MRR, and an MC writing request signal MWR. The VBV writing request signal VBVWR, VBV reading request signal VBVRR and display request signal DR are input at the flip-flops F1, F3 and F5 of the latch circuit 44 and latched in those flip-flops in accordance with clocks applied to the flip-flops, respectively. On the other hand, the latched VBV writing request signal VBVWR, VBV reading request signal VBVRR and display request signal DR are sent to the flip-flops F2, F4 and F6 which are coupled to respective output nodes of the flip-flops F1, F3 and F5. The flip-flops F2, F4 and F6 latch the received request signals VBVWR, VBVRR and DR therein.

An output from the flip-flop F2 is sent to an inverter G5 included in the priority decoder 46. The output from the flip-flop F2 is also applied to a multiplexor M3 included in the multiplexor unit 48. On the other hand, respective outputs from the flip-flops F4 and F6 are applied to AND gates G1 and G2 included in the latch circuit 44. The AND gates G1 and G2 also receive respective outputs from inverters G3 and G4 included in the latch circuit 44. The outputs of the inverters G3 and G4 are signals respectively indicative of data states in the video buffer, namely, a buffer full state and a buffer empty state. Accordingly, the AND gate G1 outputs an activated signal, namely, a logic-high signal, when a VBV writing request signal VBVWR is generated under the condition in which the video buffer is not in its data full state. On the other hand, the AND gate G2 outputs an activated signal, namely, a logic-high signal, when a VBV reading request signal VBVRR is generated under the condition in which the video buffer is not in its data empty state. Such a configuration is adapted to prevent writing/reading operations when writing/reading requests are made under the condition in which there is no data writing area in the video buffer or no data to be read.

The VBV writing request signal VBVWR and VBV reading request signal VBVRR output from the AND gates G1 and G2 are applied to inverters G6 and G7 included in the priority decoder 46, respectively. These signals VBVWR and VBVRR are also sent to AND gates G10 and G9 included in the priority decoder 46, respectively. The inverters G5, G6 and G7 of the priority decoder 46, which receive output signals from the latch circuit 44, invert the received signals which are, in turn, sent to a NAND gate G8 included in the priority decoder 46. The output from the inverter G5 is also applied to AND gates G9 and G10 included in the priority decoder 46. The AND gate G9 also receives the output from the inverter G6. The AND gates G9 and G10 send their outputs to multiplexors M2 and M3 included in the multiplexor unit 48, respectively. In accordance with such a configuration, the NAND gate G8 of the priority decoder 46 outputs a signal having a logic value of 1 when at least one of the request signals input at the latch circuit 44 is in its activated state, namely, its logic "1" state. In this case, an activated MC holding signal MC-H is output from the priority decoder 46.

When the MC holding signal MC-H output from the priority decoder 46 is in an activated state, namely, a logic "1" state, it serves to hold operations of the MC reading controller 36 and MC writing controller 38. In this case, MC reading and writing operations are temporarily stopped. In other words, the generation of the MC reading request signal MRR and MC writing request signal MWR, which are set to have a lower priority than the VBV writing request signal VBVWR, VBV reading signal VBVRR and display request signal DR, is terminated. When the operations of the MC reading controller 36 and MC writing controller 38 are stopped because of the activated motion compensation holding signal MC-H having a logic value of 1, both the request signals MRR and MWR, which are applied to an OR gate G11 included in the multiplexor unit 48, have a logic value of 0. The multiplexors M1 to M3 of the multiplexor unit 48 receive an output from the OR gate G11. When the multiplexors M1 to M3 receive an output from the OR gate Gll resulting from request signals MRR and MWR having a logic value of 0, they select signals which are decoded in accordance with a given priority order and received at respective input terminals B thereof. The selected signals are output as service codes SC. The multiplexors M1 to M3 also have input terminals A for receiving respective output signals from flip-flops F7 to F9 included in the multiplexor unit 48. The flip-flops F7 to F9 are coupled to output terminals of the multiplexors M1 to M3, respectively.

For example, when a display request signal DR having a logic value of 1 is applied to the flip-flop F1, the flip-flop F2 outputs a signal having a logic value of 1. As a result, the NAND gate G8 outputs an activated MC holding signal MC-H having a logic value of 1. Based on this signal MC-H, the MC reading controller 36 and MC writing controller 38 stop their operations. Accordingly, the OR gate Gll outputs a low-level signal. Based on this low-level signal from the OR gate G11, the multiplexor M3 selects a signal input at its input terminal B, namely, a display request signal DR output from the flip-flop F2, and sends the selected signal to the flip-flop F9. The flip-flop F9 latches and outputs the display request signal DR. Thus, the service code SC of 3 bits, which is output from the multiplexor unit 48, is changed.

Where the latch circuit 44 receives at least two active request signals, it latches the received signals and then sends them to the priority order decoder 46. The priority order decoder 46 decodes the latched request signals, thereby generating a decoded signal for generating a service code SC having a highest priority. For example, where a VBV writing request signal VBVWR and a VBV reading request signal VBVRR are generated in a simultaneous manner, the AND gate G9, which receives the VBV reading request signal VBVRR via the AND gate G2, can not output the received VBV reading request signal VBVRR because the output from the AND gate G1 also applied to the AND gate G9 is inverted from a high level to a low level by the inverter G6. In this case, the AND gate G10, which receives the VBV writing request signal VBVRR via the AND gate G1, outputs the received VBV reading request signal VBVRR because the output from the flip-flop F2 also applied to the AND gate G10 is inverted from a low level to a high level by the inverter G5. This means that the VBV writing request signal VBVWR has a priority over the VBV reading request signal VBVRR.

In other words, when a VBV reading request signal VBVRR and a VBV writing request signal VBVWR having a priority over the VBV reading request signal VBVRR are simultaneously activated, only the VBV writing request signal VBVWR set to have a priority is output from the AND gate G10 because the output from the AND gate G9 associated with the VBV reading request signal VBVRR is at a low level.

The service code SC, corresponding to the request signal having the highest priority, generated in accordance with the above-mentioned operation is then sent, via the memory interface 42, to a control block which executes a service associated with that request signal. When the service associated with the request signal generated from an optional controller is completely executed under the control of the control block, the controller generates a service completion signal.

For example, where the control block executes and completes a service associated with a display request signal DR generated from the display controller 34, the display controller 34 outputs a display control completion signal S-display, display-done of a logic "high". The display control completion signal S-display, display-done is applied to a NAND gate G15 included in the service completion control signal generating circuit 50. The flip-flop F6 of the latch circuit 44 receives an output from the NAND gate G15. When the NAND gate G15 receives a display control completion signal S-display, display-done of a logic "high", it outputs a low-level signal. In accordance with the low-level signal from the NAND gate G15, the flip-flop F6 clears its output which has been set to a logic value of 1. When a writing service associated with a writing request corresponding to a VBV writing request signal is completed, a writing service completion signal SVBVW is generated. The writing service completion signal SVBVW is applied to a NAND gate G13 included in the service completion control signal generating circuit 50. The flip-flop F4 of the latch circuit 44 receives an output from the NAND gate G13. When the NAND gate G13 receives a writing service completion signal SVBVW, it outputs a low-level signal. In accordance with the low-level signal from the NAND gate G13, the flip-flop F4 clears its output. Accordingly, the completion of the service is identified. On the other hand, a reading service completion signal SVBVR is generated when a reading service associated with a reading request corresponding to a VBV reading request signal is completed. The reading service completion signal SVBVR is applied to a NAND gate G12 included in the service completion control signal generating circuit 50. The flip-flop F2 of the latch circuit 44 receives an output from the NAND gate G12. When the NAND gate G12 receives a reading service completion signal SVBVR, it outputs a low-level signal. In accordance with the low-level signal from the NAND gate G12, the flip-flop F2 clears its output. Accordingly, the completion of the service is identified.

On the other hand, when no one of the above-mentioned three request signals has a logic value of 1, the MC holding signal MC-H, which is output from the NAND gate G8 of the priority order decoder 46, is at its low level. In this state, a service code for a motion compensation processing is generated. The service-done signal S-done is not generated unless all services requested are completed.

Although the above-mentioned embodiment of the present invention has been described in conjunction with a configuration for processing three request signals, the present invention may be extended to a configuration for processing an increased number of request signals. It is also noted that the priority order of request signals can be easily changed by changing the configuration of the service code generating circuit.

As apparent from the above description, in accordance with embodiments of the present invention, it is possible to execute services respectively associated with request signals from a plurality of controllers in accordance with a given priority order by use of a simple circuit configuration. Accordingly, the present invention can be easily applied to MPEG1 and MPEG2 decoders. The present invention can also be easily applied to a system adapted to execute a multi-process. Where the present invention is applied to MPEG1 and MPEG2 decoders, a processing priority order is determined in accordance with an appropriate hardware operation. Accordingly, a high-speed operation is achieved. This results in an improvement in the performance of MPEG systems. Since the circuit configuration is simplified, a reduction in costs is achieved.

Although the preferred embodiments of the invention have been disclosed for illustrative purposes, those skilled in the art will appreciate that various modifications, additions and substitutions are possible, without departing from the scope of the invention as disclosed in the accompanying claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A priority order processing circuit for an MPEG system, comprising:
a plurality of controllers generating a plurality of request signals; and
a priority order controller (40) for determining a priority order amongst the various request signals received from said controllers and generating a service code for executing a data processing service.

2. The priority order processing circuit in accordance with claim 1, wherein said priority order controller (40) comprises:
a latch circuit (44) for latching request signals generated from the plurality of controllers;
a priority order decoder (46) coupled to output terminals of said latch circuit (44), at which said latched request signals are output, respectively, in such a manner that it receives said latched request signals in accordance with a given priority order, said priority order decoder (46) serving to generate a motion compensation holding signal in response to an activation of at least one of said latched request signals while decoding activated states of said request signals, thereby outputting one of said request signals which has a higher priority than said remaining request signals;
a multiplexor unit (48) for outputting the output from said priority order decoder as a service code in response to said motion compensation holding signal; and
a service completion control signal generating circuit (50) for initializing the outputs from said latch circuit in response to an activation of service completion signals from a plurality of associated controllers, respectively.

3. A priority order processing circuit for an MPEG system according to claim 1 or 2, wherein said plurality of controllers comprise:
a video buffer verifier writing controller (30) for generating a writing request signal when a situation exists for storing data in an external memory;
a video buffer verifier reading controller (32) for generating a reading request signal when a situation exists for reading data stored in said external memory;
a display controller (34) for generating a display request signal in response to recovered data received therein;
a motion compensation reading controller (36) for generating a motion compensation reading request signal when a motion compensation for the data stored in said external memory is requested; and
a motion compensation writing controller (38) for generating a motion compensation writing request signal when said motion compensation for the data stored in said external memory is requested.
